# EUROPÄISCHE PATENTSCHRIFT

(11) **EP 0 990 570 B1**
(45) Veröffentlichungstag und Bekanntmachung des Hinweises auf die Patenterteilung: **07.06.2006**
(21) Anmeldenummer: 99110621.2
(22) Anmeldetag: 02.06.1999
(51) Int. Cl.: B60T 8/00

(54) **Anordnungen und Verfahren zur Vermeidung von Überschlägen bei Bremsvorgängen und Beschleunigungsvorgängen für Kraftfahrzeuge**
Device and method for preventing vehicle roll-over during braking and accelerating
Dispositif et procédé pour éviter le capotage lors du freinage et de l'accélération de véhicules

(30) Priorität: 29.09.1998 DE 19844540
(43) Veröffentlichungstag der Anmeldung: 05.04.2000
(73) Patentinhaber: ROBERT BOSCH GMBH, 70442 Stuttgart (DE)
(72) Erfinder: Blosch, Georg, 71711 Murr (DE)

(56) Entgegenhaltungen:
- EP-A- 0 537 724
- EP-A- 0 550 849
- EP-A- 0 778 189

## Beschreibung

Die vorliegende Erfindung betrifft Anordnungen und Verfahren zur Vermeidung von Überschlägen bei Bremsvorgängen oder Beschleunigungsvorgängen für Kraftfahrzeuge, insbesondere Ein- oder Zweispurfahrzeuge wie Motorräder oder PKWs.

Herkömmliche Kraftfahrzeuge wiesen zur Vermeidung bzw. Erschwerung von Überschlägen während Brems- oder Beschleunigungsvorgängen Konstruktionsmerkmale wie beispielsweise einen langen Radstand, einen tiefen Schwerpunkt, eine ausgewogene Achslastverteilung oder eine geringe Brems- oder Antriebsleistung auf. In jüngster Zeit werden jedoch Fahrzeuge immer beliebter, welche einen kurzen Radstand und einen wesentlich erhöhten Schwerpunkt aufweisen. Bei derartigen Fahrzeugen besteht die Gefahr, daß bei starken Bremsmanövern, insbesondere auf Gefällestrecken, ein Überschlagen bzw. Kippen über bzw. um die Vorderachse erfolgt. Ebenso besteht die Gefahr, daß beispielsweise bei starker Beschleunigung oder beim Anfahren an Steigungen ein hinterradangetriebenes Fahrzeug um die Hinterachse nach hinten kippt. Derartige Schwierigkeiten treten beispielsweise auch bei Motorrädern oder Rennwagen, insbesondere Dragster-Rennwagen, auf. Die Vermeidung von Überschlägen während des Beschleunigungsvorgangs ist bei Motorrädern vollständig dem fahrerischen Können des Fahrers überlassen.

Aus der DE 21 33 547 C2 ist eine Bremskraftregelung für Kraftfahrzeuge mit einem jedem Rad zugeordneten Fühler zum Messen des augenblicklichen Drehverhaltens, dessen Signale in einer Auswerteschaltung aufbereitet und mit vorgegebenen Drehverzögerungs-, Beschleunigungs- und/oder Schlupfschwellen verglichen werden, bekannt, wobei die Auswerteschaltung beim Über- bzw. Unterschreiten der Schwellen Signale zum Betätigen von dem Rad zugeordneten Ein- und Auslaßventilen abgibt, wodurch der Bremsdruck zur Vermeidung des Radblockierens fällt, konstant bleibt oder steigt, wobei ferner bei Fahrzeugen mit kurzem Radstand und hohem Schwerpunkt in der Auswerteschaltung eine zusätzliche logische Verknüpfung vorgesehen ist, die den Druck an den Vorderradbremsen dann absenkt, wenn innerhalb einer bestimmten Wartezeit ein die Bodenhaftung der Hinterräder symbolisierendes Signal nicht auftrifft. Diese Druckschrift behandelt ausschließlich Bremskraftregelungen, Anordnungen zur Steigerung der Sicherheit bzw. Handhabbarkeit eines Fahrzeugs während eines Beschleunigungsvorgangs werden hingegen nicht behandelt. Zudem weist eine derartige Bremskraftregelung den Nachteil auf, daß erst bei Erhalt eines Signals, welches eine nicht vorhandene Bodenhaftung anzeigt, eine Bremskraftregelung durchgeführt wird. Aufgrund der Elastizität der Reifen kann dies zu Verzögerungen beim Einsetzen der Bremskraftregelung führen.

Aus der DE 196 09 717 A1 ist zur Erkennung von Überrollvorgängen bei Fahrzeugen eine Anordnung bekannt, bei welcher Drehratensensoren die Winkelgeschwindigkeiten des Fahrzeugs um die Gierachse, die Wankachse und die Nickachse messen, wobei Mittel vorhanden sind, welche einen Überrollvorgang signalisieren, wenn mindestens eine der gemessenen Winkelgeschwindigkeiten einen vorgebbaren Grenzwert überschreitet.

Aus der EP 0 778 189 A2 ist eine Fahrzeugsteuervorrichtung bekannt, mit welcher ein Abheben eines Hinterrades eines Fahrzeugs als vorliegend detektiert wird, wenn die folgenden Bedingungen erfüllt sind:
- die Bremsen des linken und rechten hinteren Rades stehen unter Druck,
- die Geschwindigkeit eines der Hinterräder ist größer als eine Maximalgeschwindigkeit der Vorderräder und
- die Verzögerung eines der Hinterräder liegt unter einem vorgegebenen Wert.
Bei Erfülltsein dieser Bedingungen wird dasjenige Hinterrad als von der Fahrbahnoberfläche abgehoben detektiert, welches schneller als die Maximalgeschwindigkeit der Vorderräder ist.

Aufgabe der vorliegenden Erfindung ist die Angabe von Anordnungen bzw. von Verfahren, mittels derer Überschläge bei Bremsvorgängen oder Beschleunigungsvorgängen in wirksamer Weise vermieden werden können.

Diese Aufgabe wird gelöst durch Anordnungen mit den Merkmalen der Patentansprüche 1, 2, 3, 4 sowie durch Verfahren mit den Merkmalen des Patentanspruchs 5.

Gemäß der Anordnung des Anspruches 1 kann aus der Ermittlung der Drehzahldifferenz zwischen der Drehzahl wenigstens eines Vorderrades und wenigstens eines Hinterrades (bzw. der Drehzahldifferenz zwischen Vorder- und Hinterachse) mit einem Drehzahldifferenz-Schwellwert und der Ermittlung einer Radbeschleunigung für wenigstens ein Vorderrad und für wenigstens ein Hinterrad in einfacher Weise ein die Gefahr eines Überschlags anzeigendes Kriterium angegeben werden. Bei einem Beschleunigungsvorgang eines einen Hinterradantrieb aufweisenden Fahrzeugs erfolgt nämlich im Falle eines drohenden Rückwärtsüberschlags um die Hinterachse eine Zunahme der Drehzahl der Hinterräder bei gleichzeitiger Abnahme der Drehzahl der Vorderräder. Bei Erreichen des Drehzahldifferenz-Schwellwertes und entsprechender Beschleunigungswerte erfolgt eine Ansteuerung des Fahrzeugantriebes (insbesondere mittels eines Antriebsschlupfregelungssystems (ASR)) zur Verminderung der Antriebsleistung, wodurch ein drohender Rückwärtsüberschlag wirksam vermieden werden kann. Ein geeigneter Drehzahldifferenz-Schwellwert kann beispielsweise auf der Grundlage von Fahrversuchen oder auch Modellberechnungen, welchen wenigstens die Fahrzeuggeometrie zugrunde liegt, ermittelt werden. Zweckmäßigerweise beschreibt der Schwellenwert einen Zustand, in dem noch keine akute Gefahr eines Überschlags besteht.

Gemäß der Anordnung des Anspruches 2 sind an der Fahrzeugvorderachse Sensoren oder Schalter, beispielsweise Endlageschalter angebracht. Mittels derartiger Endlageschalter ist die Lage der Vorderachse relativ zur Fahrbahnoberfläche bzw. relativ zu der Hinterachse in einfacher Weise feststellbar, so daß auch hier bei Vorliegen vorgebbarer Bedingungen eine Ansteuerung der Motorsteuerung bzw. eine Verminderung der Antriebsleistung, insbesondere mittels eines ASR-Systems, durchgeführt werden kann. Es können prinzipiell zwei Arten von Endlageschaltern verwendet werden. Bei der ersten Art von Endlageschaltern handelt es sich um diskrete Endlageschalter, die lediglich unterscheiden, ob die Endlage erreicht ist oder nicht. Solange die Endlage nicht erreicht wird, erzeugen derartige Endlager kein Signal. Erst wenn die Endlage erreicht ist wird ein Signal ausgegeben. Es sind ferner Endlageschalter vorsehbar, welche ein wertekontinuierliches Signal abgeben. Ein derartiges wertekontinuierliches Signal kann als Maß für die Position der gefederten Masse (Fahrzeugkarosserie) gegenüber der ungefederten Masse (Rad, Achsbauteile) bzw. des jeweils vorliegenden Federwegs ausgewertet werden. Durch Verwendung derartiger Endlageschalter ist es möglich, einen Bremsüberschlag oder auch einen Beschleunigungsüberschlag lediglich unter Verwendung eines einer Fahrzeugachse zugeordneten Endlageschalters zu erfassen. Es kann nämlich bei einem Endlageschalter dieser Art erkannt werden, in welche Richtung sich die gefederte Masse bewegt, bzw. wie groß die Ausfederraten, d.h. die Veränderungen der Federwege sind. Bei Verwendung eines einzigen Endlageschalters ist das dynamische Verhalten des Fahrzeuges mit zu berücksichtigen. Als Alternative zu Endlageschaltern ist auch die Verwendung von Niveaugebern, wie sie beispielsweise im Zusammenhang mit einer Leuchtweitenregelung verwendet werden, möglich.

Gemäß der Anordnung des Anspruches 3 ist wenigstens ein Drehratensensor zur Feststellung einer Drehung des Fahrzeugs um seine Hinterachse vorgesehen. Bei Verwendung von Drehratensensoren zur Erkennung eines drohenden Überschlags wird die Drehrate um die entsprechende Fahrzeugachse mit einem zugehörigen Schwellwert verglichen. Ferner wird die Drehrate zeitlich integriert und somit der Drehwinkel um die entsprechende Fahrzeugachse ermittelt. Dieser Drehwinkel wird ebenfalls mit einem zugehörigen Schwellwert verglichen. Ist zum einen die Drehrate, und zum anderen der Drehwinkel jeweils größer als der zugehörige Schwellwert, wird auf Überschlaggefahr erkannt.

Vorteilhafterweise sind die kennzeichnenden Merkmale der angegebenen erfindungsgemäßen Lösungen in beliebiger Weise kombinierbar. Hierdurch ist eine erhöhte Zuverlässigkeit bzw. Sicherheit bei der Vermeidung von Überschlägen von Kraftfahrzeugen während Beschleunigungsvorgängen erreichbar.

Der Fahrzeugzustand zu Beginn eines Überschlags ist bei einem Bremsvorgang dadurch charakterisiert, daß die Bremse sehr stark betätigt wird und das Fahrzeug beginnt, um die Vorderachse nach vorne zu kippen. Damit geht die Drehzahl der Hinterräder, welche beispielsweise mittels eines ABS/ASR-Systems beaufschlagbar sind, durch den abrupten Kraftschlußverlust gegen Null. Aufgrund der Elastizität der Bereifung erfolgt dieser Kraftschlußverlust jedoch zeitversetzt zu dem tatsächlichen Beginn der Überschlagbewegung. Mittels der die Bewegung bzw. die Endlage der ungefederten Achsbauteile feststellenden Schalter oder Sensoren ist hingegen die Möglichkeit gegeben, bereits bei teilweiser oder voller Ausfederung, d.h. schon vor dem Kraftschlußverlust durch die Hinterräder, eine der Situation angemessene Reduktion der Abbremsung einzuleiten. Zur Durchführung einer derartigen Reduktion sind insbesondere ABS/ASR-Systeme verwendbar. Eine Vermeidung von Überschlägen bei Beschleunigungsvorgängen ist in analoger Weise durchführbar, da hier lediglich die von den Schaltern bzw. Sensoren erfaßte Bewegungsrichtung der ungefederten Bauteile bezüglich der gefederten Bauteile umgekehrt ist.

Dabei ist wenigstens ein aktiver Drehzahlfühler, der mit wenigstens einem Hinterrad oder der Hinterachse des Fahrzeugs in Wirkverbindung steht, vorgesehen. Hiermit kann in zuverlässiger Weise ein Kraftschlußverlust der insbesondere ABS- oder ASRbeaufschlagten Hinterräder festgestellt werden, womit ein wirksames Kriterium zur Aktivierung eines ABS- oder ASR-Systems zur Verfügung gestellt ist. Derartige ABS-Systeme können beispielsweise in einem solchen Fall den Bremsdruck bzw. die Bremskraft in den Radbremsen der Vorderräder solange absenken, bis die Hinterräder sich wieder drehen, oder ein Grenzwert der Regeldauer überschritten ist, welcher sicherstellt, daß das Fahrzeug aufgrund seiner Trägheit nicht mehr in einem Überschlagvorgang begriffen ist, sondern insgesamt zum Stillstand gekommen ist. Hiermit ist auch gewährleistet, daß das Fahrzeug sich nicht "kriechend" weiterbewegt und somit der Bremsweg in nachteilhafter Weise verlängert würde. Insbesondere in Kombination mit der erfindungsgemäßen Lösung der Anbringung von Sensoren oder Schaltern zur Feststellung der Endlage wenigstens eines ungefederten Achsbauteils ist hiermit ein sicheres und zuverlässiges System zur Vermeidung von Überschlägen eines Kraftfahrzeugs zur Verfügung gestellt, wodurch die Fahrzeugsicherheit wesentlich erhöht ist.

Zweckmäßigerweise weist die Anordnung zur Vermeidung von Überschlägen bei Bremsvorgängen einen Drehratensensor und Mittel zur Aktivierung des Bremssteuersystems im Falle des Erreichens oder Überschreitens einer vorbestimmten Drehrate auf.

Die Anordnungen zur Vermeidung von Überschlägen bei Bremsvorgängen sind bei sämtlichen Bremsensystemen, so auch Bremsensystemen, die mit nichtflüssigen oder nicht-gasförmigen Übertragungsmedien betrieben werden, verwendbar.

Dabei sind an der Hinterachse angebrachte Drehratensensoren sowohl zur Erfassung von drohenden Überschlägen bei Bremsvorgängen als auch Beschleunigungsvorgängen verwendbar.

Die Anordnungen zur Verhinderung von Überschlägen sind, wie erwähnt, in vorteilhafter Weise zusammen mit ABS- bzw. ASR-Systemen verwendbar. Eine entsprechende Erweiterung derartiger ABS- oder ASR-Systeme ist in einfacher Weise implementierbar.

Die vorliegende Erfindung wird nun unter Bezugnahme auf die beigefügte Zeichnung im einzelnen erläutert. In dieser zeigt
- Figur 1: eine schematische Darstellung der Verwendung von Endlageschaltern zur Feststellung eines drohenden Überschlags eines Kraftfahrzeugs,
- Figur 2: eine schematische Darstellung der Verwendung von Niveaugebern zur Feststellung eines drohenden Überschlags eines Kraftfahrzeugs,
- Figur 3: eine schematische Perspektivansicht eines Kraftfahrzeugs, welches mit einem ABS-/ASR-System und erfindungsgemäßen Drehratensensoren ausgerüstet ist,
- Figur 4: ein Blockschaltbild zur prinzipiellen Darstellung der erfindungsgemäßen Anordnungen, und
- Figur 5: ein die Wirkungsweise der Anordnungen gemäß Figur 4 bzw. die erfindungsgemäßen Verfahren darstellendes Flußdiagramm.

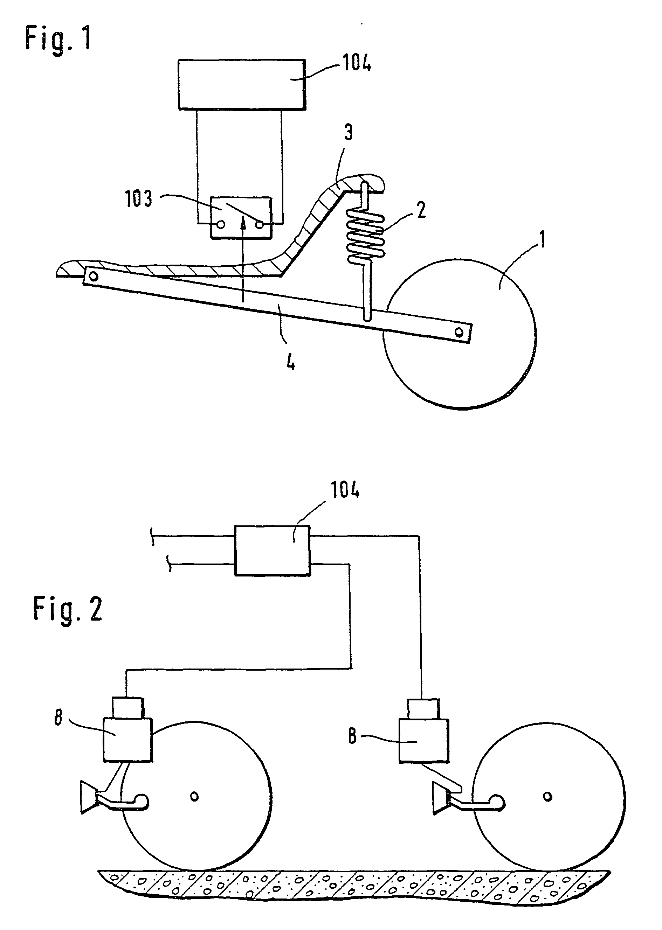

In Figur 1 ist ein Rad 1 über ein Achsbauteil 4 und eine Federung 2 mit einer gefederten Masse, insbesondere dem Fahrzeugaufbau 3 gekoppelt. Das Achsbauteil 4 beaufschlagt entsprechend seiner Bewegung relativ zu dem Fahrzeugaufbau 3 einen Endlageschalter 103. Der Endlageschalter 103 ist über Leitungen mit einem Steuergerät 104 verbunden.

Für die nachfolgende Erläuterung der Figur sei angenommen, daß das Rad 1 ein Vorderrad eines Kraftfahrzeugs, und entsprechend das Achsbauteil 4 ein Achsbauteil der Vorderachse des Kraftfahrzeugs ist. Ferner sei davon ausgegangen, daß das (nicht dargestellte) Fahrzeug einen Hinterradantrieb aufweist. Es sei angemerkt, daß diese Annahmen lediglich aus Gründen der Anschaulichkeit der Darstellung erfolgen, und in analoger Weise beispielsweise für einen Vorderradantrieb anwendbar sind.

Bei einem zu starken Beschleunigen des Kraftfahrzeugs neigt (im Falle eines Hinterantriebs) der Bereich der Vorderachse des Kraftfahrzeugs dazu, von der Fahrbahnoberfläche abzuheben. Hierdurch wird (Bewegung der gefederten Masse bzw. des Fahrzeugaufbaus 3 nach oben) der Endlageschalter 103 in seine geschlossene Stellung gebracht, so daß dem Steuergerät 104 ein entsprechendes Signal zugeführt wird. Das Steuergerät 104 ist nun in der Lage, im Falle eines durch die Stellung des Endlageschalters angezeigten drohenden Abhebens bzw. Rückwärtsüberschlags des Fahrzeugs geeignete Steuerungsmaßnahmen einzuleiten. Über im Hinterachsenbereich angeordnete Endlageschalter läßt sich entsprechend ein Rückwärtsüberschlag um die Hinterachse des Kraftfahrzeugs detektieren bzw. verhindern.

In Figur 2 sind schematisch Niveaugeber zur Feststellung der Stellung eines Fahrzeugaufbaus bezüglich einer Fahrbahnoberfläche mit 8 bezeichnet. Derartige Niveaugeber sind beispielsweise im Bereich der automatischen Leuchtweitenregelung bekannt. Die Niveaugeber 8 sind mit einem Steuergerät 104 verbunden, welches im Falle eines durch die Niveaugeber angezeigten drohenden Überschlages des Kraftfahrzeugs geeignete Steuerungsmaßnahmen einleiten kann.

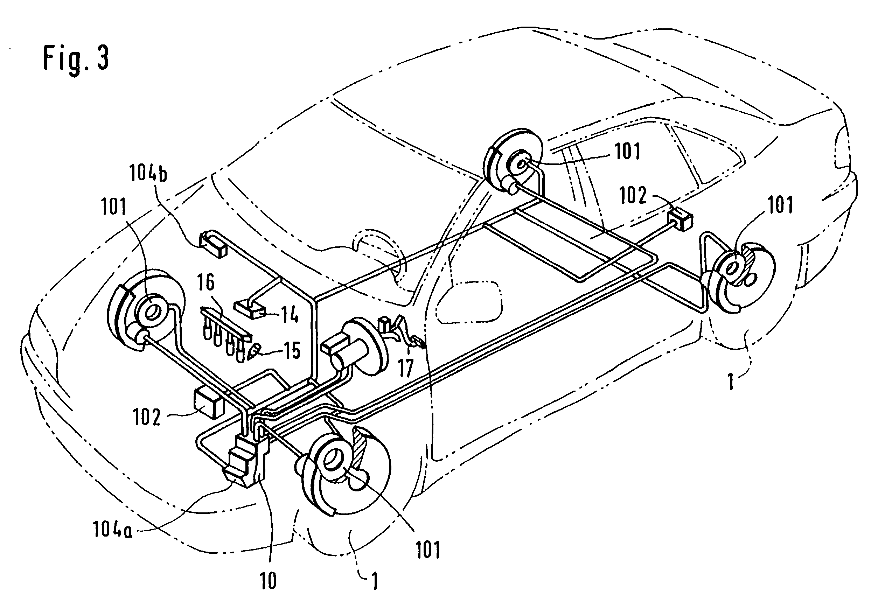

Die Steuergeräte der Figuren 1 und 2 sind beispielsweise Steuergeräte eines ABS-/ASR-Systems, wie es prinzipiell in Figur 3 dargestellt ist, bzw. mit einem ABS-/ASR-Steuergerät zusammenwirkende Steuergeräte.

Bei dem in Figur 3 dargestellten System ist jedes Rad des Kraftfahrzeugs mit einem (schematisch dargestellten) Drehzahlsensor 101 ausgebildet. Zur entsprechenden Regelung der an den jeweiligen Rädern 1 anliegenden Bremsdrücke sind die Meßwerte der Raddrehzahlsensoren 101 auf ein Steuergerät 104a eines Hydroaggregats 10 gebbar. Das Kraftfahrzeug ist ferner mit (schematisch dargestellten) Drehratensensoren 102 ausgebildet, welche insbesondere ein Kippverhalten des Fahrzeugs (Drehung um Vorder- bzw. Hinterachse) detektieren. Die durch die Sensoren 102 ermittelten Meßwerte sind auf das Anbausteuergerät 104a des Hydroaggregats 10 und ein weiteres Motormanagement-Steuergerät 104b gebbar. Durch Zusammenwirken der genannten Steuergeräte erfolgt im Falle eines drohenden Vorwärts- oder Rückwärtsüberschlags des Kraftfahrzeugs bei zu starker Beschleunigung bzw. einem plötzlichen Bremsvorgang (dargestellt durch die Signale der Drehratensensoren 102) eine Modulation des Bremsdrucks der Räder 1 und/oder ein Motormanagement unter Beaufschlagung beispielsweise eines Drosselklappenstellers 14, von Einspritzventilen 15 oder eines Zündmoduls 16. Als weitere Sensorgröße kann den Steuergeräten das Signal eines Fahrpedalsensors 17 zugeführt werden. Ein Überschlagen des Kraftfahrzeugs bei Beschleunigungsvorgängen wird dadurch vermieden, daß die durch die Raddrehzahlsensoren 101 ermittelten Drehzahlen wenigstens eines Vorderrades 1 und wenigstens eines Hinterrades 1 mit einem einstellbaren Drehzahldifferenz-Schwellwert verglichen werden. Durch zeitliche Ableitung der Meßwerte der Raddrehzahlsensoren 101 erfolgt ferner eine Ermittlung der Radbeschleunigung wenigstens eines Vorderrades und wenigstens eines Hinterrades. Wird nun festgestellt, daß bei Erreichen oder Überschreiten des Drehzahldifferenz-Schwellwertes gleichzeitig für wenigstens ein Vorderrad die Radbeschleunigung negativ, und wenigstens für ein Hinterrad die Radbeschleunigung positiv ist, wird das Hydroaggregat 10 bzw. das Motormanagement zur Generierung und Durchführung entsprechender Korrektursignale bzw. Korrekturen betätigt.

Die durch die Drehratensensoren 102 ermittelten Kipp- bzw. Drehraten können zur Feststellung, ob ein Überschlag droht, zusätzlich oder alternativ zu den genannten Endlageschaltern 103 oder Niveaugebern 8 vorgesehen sein. Durch eine entsprechenden kombinierte Auswertung der jeweiligen Sensorsignale ist beispielsweise ein redundantes System zur Überwachung eines Überschlags zur Verfügung gestellt, wodurch die Sicherheit und Zuverlässigkeit erhöht ist. Es ist ebenfalls möglich, einen drohenden Kippzustand des Kraftfahrzeugs ausschließlich auf der Grundlage der durch die Raddrehzahlsensoren 101 erzeugten Signale auszuführen. Zu diesem Zweck wird festgestellt, ob die Raddrehzahl an der Vorder- oder Hinterachse plötzlich absinkt, wodurch ein Kraftverlust der Räder bezüglich der Fahrbahn darstellbar ist. Aus einem derartigen Kraftschlußverlust kann auf einen drohenden Überschlag geschlossen werden.

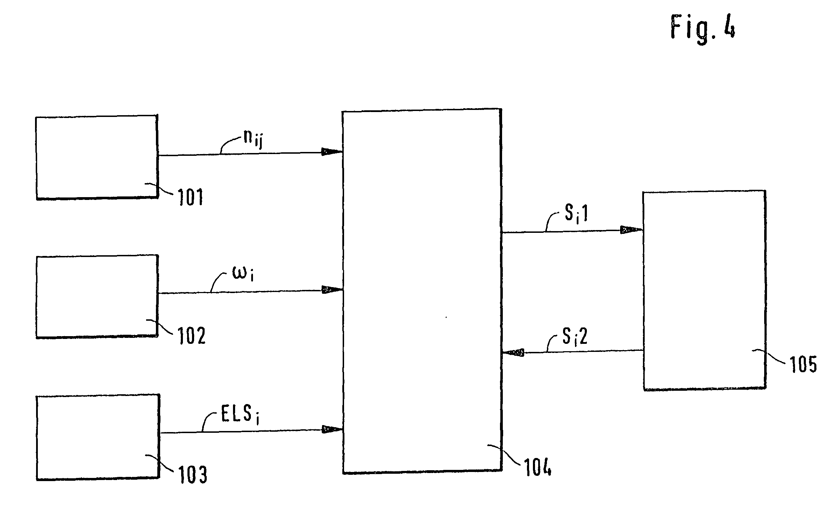

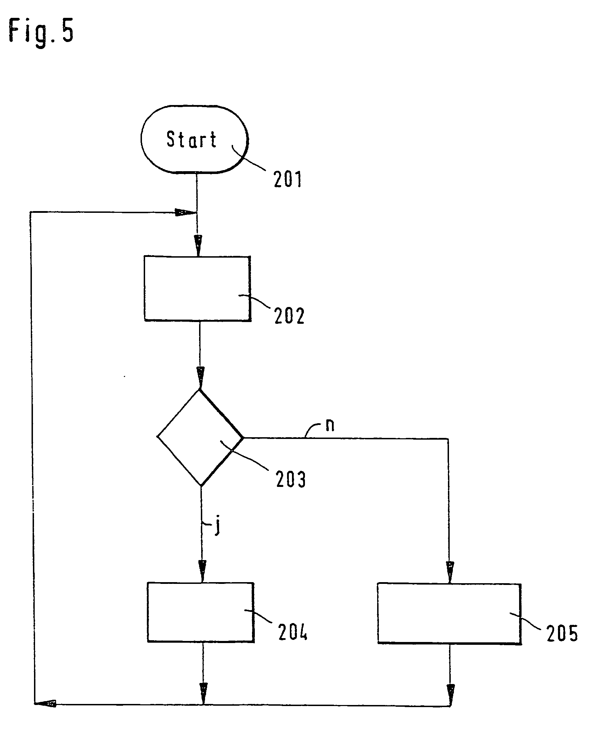

Anhand der Figuren 4 und 5 werden nun die erfindungsgemäß bereitgestellten Möglichkeiten zur Vermeidung von Überschlägen bei Bremsvorgängen oder Beschleunigungsvorgängen für Kraftfahrzeuge in allgemeinerer Form erläutert:

In Figur 4 sind mit 101 Raddrehzahlsensoren bezeichnet, welche als Signale Drehzahlen nᵢⱼ liefern. Der Index i bezeichnet vorne bzw. hinten, der Index j links bzw. rechts. Denkbar wäre auch die Betrachtung eines Raddrehzahlsensors je Fahrzeugachse. Ein Drehratensensor ist mit 102 bezeichnet. Die von diesem Drehratensensor ermittelte Drehrate ist mit ωᵢ bezeichnet, wobei der Index i für Vorderachse bzw. Hinterachse steht. Mit 103 ist ein Endlageschalter bezeichnet. Das durch einen jeweiligen Endlageschalter ermittelte Signal ist mit ELSᵢ bezeichnet, wobei der Index i wiederum für Vorder- bzw. Hinterachse steht. Es ist denkbar, einer Achse mehrere Endlageschalter 103 zuzuordnen, beispielsweise einen Endlageschalter 103 pro Rad.

Die Signale nᵢⱼ, ωᵢ und ELSᵢ werden auf ein Steuergerät 104 gegeben, welches Signale bzw. Größen Sᵢ1 zur Ansteuerung einer Aktuatorik 105 (z.B. ABS/ASR bzw. Motormanagement) ausgibt. Hierbei bildet das Steuergerät 104 die zeitliche Ableitung der ermittelten Drehzahlen, d/dt (nᵢⱼ), zur Ermittlung einer Beschleunigung des Kraftfahrzeugs. Das Steuergerät 104 empfängt Signale bzw. Größen Sᵢ2 als Rückmeldung von der Aktuatorik 105.

Mittels der Aktuatorik 105 erfolgt im Beschleunigungsfall bei drohendem Überschlag (bei Hinterradantrieb beispielsweise drohender Überschlag um die Hinterachse des Fahrzeugs) eine Beeinflussung des Drosselklappenstellers bzw. eine Beeinflussung des Zündzeitpunkts, so daß das Motormoment reduziert wird. Im Bremsfall, d.h. insbesondere im Falle eines drohenden Überschlags über die Vorderachse, erfolgt eine Beeinflussung der den Radbremszylindern zugeordneten Ventile, so daß Bremsdruck abgebaut werden kann.

Alternativ bzw. unterstützend können zu den Endlageschaltern 103 auch Niveaugeber eingesetzt werden. Bei der Verwendung von Niveaugebern wird während der Applikation ein durch den Niveaugeber erfaßter Wert ermittelt, der die Überschlagsgefahr des Fahrzeuges charakterisiert (die dabei vorliegende Situation entspricht beispielsweise der Situation, bei der die Endlageschalter 103 entweder ihren jeweiligen Anschlagpunkt erreicht haben bzw. kurz davor stehen). Dieser Wert ist bei der erfindungsgemäßen Überwachung als Schwellwert verwendbar.

Der Ablauf der Überwachung von drohenden Überschlägen wird nun anhand der Figur 5 im einzelnen erläutert.

Mit 201 ist der Beginn des Verfahrens bezeichnet. In einem Schritt 202 erfolgt die Bereitstellung von Meß- bzw. Sensorgrößen.

Beispielsweise bei der Auswertung von Raddrehzahldifferenz und Radbeschleunigung für den Fall eines drohenden Beschleunigungsüberschlags werden in Schritt 202 die Werte nᵢⱼ und d/dt (nᵢⱼ) bereitgestellt. Bei der Auswertung von Endlageschaltern im Falle einer Beschleunigungsüberschlags- bzw. Bremsüberschlagsüberwachung erfolgt hier die Bereitstellung der Werte ELSᵢ. Entsprechend erfolgt bei Auswertung von Niveaugebern die Bereitstellung von Niveaugebersignalen. Werden Drehratensensoren zur Überwachung eines Beschleunigungsüberschlags bzw. Bremsüberschlags verwendet, erfolgt in Schritt 202 die Bereitstellung von ωᵢ bzw. des erwähnten Integrals von ωᵢ über die Zeit. Schließlich kann im Falle der Auswertung der Raddrehzahlen zur Feststellung eines Kraftschlußverlustes für die Situation eines Bremsüberschlags bzw. Beschleunigungsüberschlags eine Bereitstellung entsprechender Raddrehzahlwerte vorgenommen werden.

Im anschließenden Schritt 203 erfolgt eine Überprüfung, ob ein Überschlag droht oder nicht. Die im folgenden aufgeführten Überprüfungsbedingungen können für einen drohenden Beschleunigungsüberschlag bzw. Bremsüberschlag jeweils beliebig kombiniert werden.

Bei Feststellung einer Raddrehzahldifferenz wenigstens eines Vorderrades und wenigstens eines Hinterrades, welche größer ist als ein Schwellwert, sowie entsprechender Radbeschleunigungen (Radbeschleunigung der Vorderräder negativ und Radbeschleunigung der Hinterräder positiv) erfolgt in Schritt 204 ein entsprechender Eingriff. Wird bzw. werden der genannte Schwellwert und/oder die entsprechenden Radbeschleunigungen nicht erreicht, erfolgt eine Verzweigung zu Schritt 205, wobei hier kein Eingriff erfolgt.

Eine entsprechende Verzweigung zu Schritt 204 erfolgt, wenn beispielsweise ein Endlageschalter mit Signalwerten 0,1 den Wert ELSᵢ = 1 ausgibt. Bei Verwendung von wertekontinuierlichen Endlageschaltern erfolgt ein Eingriff gemäß Schritt 204 für den Fall, daß ELSᵢ größer als ein Schwellwert ist. Eine entsprechende Regelung erfolgt bei Meßwerten, die von Niveaugebern abgeleitet sind.

Bei der Verwendung von Drehratensensoren erfolgt für den Fall, daß die ermittelte Drehrate ωᵢ um die Vorder- oder Hinterachse und ein Integral von ωᵢ über die Zeit größer als ein Schwellwert sind, ein Eingriff gemäß Schritt 204, andernfalls erfolgt gemäß Schritt 205 kein Eingriff.

Bei Auswertung lediglich der Raddrehzahlen der Vorder- bzw. Hinterachse (im Falle der Überwachung eines Überschlags über die Fahrzeugvorderachse bzw. Fahrzeughinterachse zur eine Erkennung eines Kraftschlusses der Räder) erfolgt bei Überschreitung eines entsprechenden Schwellwertes eine Ansteuerung des Schrittes 204, andernfalls des Schrittes 205.

## Patentansprüche

1. Anordnung zur Vermeidung von Überschlägen bei Beschleunigungsvorgängen für Kraftfahrzeuge, insbesondere Ein- oder Zweispurfahrzeuge wie Motorräder oder PKWs, **gekennzeichnet durch** Mittel (101, 104) zum Vergleich einer Drehzahldifferenz zwischen der Drehzahl wenigstens eines Vorderrades oder der Vorderachse und der Drehzahl wenigstens eines Hinterrades oder der Hinterachse des Kraftfahrzeugs mit einem einstellbaren Drehzahldifferenz-Schwellwert, Mittel (101, 104) zur Ermittlung einer Radbeschleunigung für wenigstens ein Vorderrad und für wenigstens ein Hinterrad und Mittel (105) zur Ansteuerung des Fahrzeugantriebs bei Erreichen oder Überschreiten des Drehzahldifferenz-Schwellwerts, wenn gleichzeitig für wenigstens ein Vorderrad die Radbeschleunigung negativ und für wenigstens ein Hinterrad die Radbeschleunigung positiv ist.

2. Anordnung nach Patentanspruch 1, **gekennzeichnet durch** an der Fahrzeugvorderachse angebrachte Sensoren oder Schalter (103, 8) zur Feststellung der Lage oder Endlage der Fahrzeugvorderachse und Mittel zur Ansteuerung des Fahrzeugantriebs bei Feststellung einer einem drohenden Überschlag entsprechenden Lage oder Endlage der Fahrzeugvorderachse.

3. Anordnung nach Patentanspruch 1, **gekennzeichnet durch** wenigstens einen Drehratensensor (102) zur Feststellung einer Drehung des Kraftfahrzeugs um seine Hinterachse und Mittel (105) zur Ansteuerung des Fahrzeugantriebs im Falle des Erreichens oder Überschreitens einer vorbestimmten Drehrate.

4. Verfahren zur Vermeidung von Überschlägen bei Beschleunigungsvorgängen für Kraftfahrzeuge, insbesondere Ein- oder Zweispurfahrzeuge wie Motorräder oder PKWs, **gekennzeichnet durch** folgende Schritte:
- Vergleich einer Drehzahldifferenz zwischen der Drehzahl wenigstens eines Vorderrades (1) oder der Vorderachse und der Drehzahl wenigstens eines Hinterrades (1) oder der Hinterachse des Kraftfahrzeuges mit einem einstellbaren Drehzahldifferenz-Schwellwert,
- Ermittlung einer Radbeschleunigung für wenigstens ein Vorderrad (1) und für wenigstens ein Hinterrad (1), und
- Ansteuerung des Fahrzeugantriebs bei Erreichen oder Überschreiten des Drehzahldifferenz-Schwellwertes, wenn gleichzeitig für wenigstens ein Vorderrad (1) die Radbeschleunigung negativ und für wenigstens ein Hinterrad (1) die Radbeschleunigung positiv ist.

## Claims

1. Arrangement for avoiding rollovers during acceleration processes for motor vehicles, in particular single-track or dual-track vehicles such as motorbikes or passenger cars, **characterized by** means (101, 104) for comparing a difference in rotational speed between the rotational speed of at least one front wheel or the front axle and the rotational speed of at least one rear wheel or the rear axle of the motor vehicle with an adjustable threshold value for the difference in rotational speed, means (101, 104) for determining a wheel acceleration for at least one front wheel and for at least one rear wheel, and means (105) for actuating the vehicle drive when the threshold value for the difference in rotational speed is reached or exceeded if the wheel acceleration is negative for at least one front wheel and the wheel acceleration is positive for at least one rear wheel at the same time.

2. Arrangement according to Patent Claim 1, **characterized by** sensors or switches (103, 8) which are mounted on the front axle of the vehicle and have the purpose of determining the position or end position of the front axle of the vehicle and means for actuating the vehicle drive when a position or end position of the front axle of the vehicle which corresponds to a risk of a rollover is determined.

3. Arrangement according to Patent Claim 1, **characterized by** at least one rotational speed sensor (102) for determining a rotation of the motor vehicle about its rear axle, and means (105) for actuating the vehicle drive if a predetermined rotational speed is reached or exceeded.

4. Method for avoiding rollovers in acceleration processes for motor vehicles, in particular single-track or dual-track vehicles such as motorbikes or passenger cars, **characterized by** the following steps:
- comparison of a difference in rotational speed between the rotational speed of at least one front wheel (1) or the front axle and the rotational speed of at least one rear wheel (1) or the rear axle of the motor vehicle with an adjustable threshold value for the difference in rotational speed,
- determination of a wheel acceleration for at least one front wheel (1) and for at least one rear wheel (1), and
- actuation of the vehicle drive when the threshold value for the difference in rotational speed is reached or exceeded if the wheel acceleration is negative for at least one front wheel (1) and the wheel acceleration is positive for at least one rear wheel (1) at the same time.

## Revendications

1. Dispositif pour éviter le renversement lors d'accélération de véhicules automobiles, en particulier de véhicules à une ou deux traces comme des motocyclettes ou des voitures particulières,
**caractérisé par**
des moyens (101, 104) pour comparer une différence de vitesse de rotation entre la vitesse de rotation d'au moins une roue avant ou de l'essieu avant et la vitesse de rotation d'au moins une roue arrière ou de l'essieu arrière du véhicule automobile avec une valeur de seuil réglable de la différence de vitesse de rotation, des moyens (101, 104) pour déterminer une accélération de roue pour au moins une roue avant et pour au moins une roue arrière et des moyens (105) pour commander la propulsion du véhicule lorsque l'on atteint ou dépasse la valeur de seuil de la différence de vitesse de rotation, lorsque simultanément l'accélération de roue est négative pour au moins une roue avant et l'accélération de roue est positive pour au moins une roue arrière.

2. Dispositif selon la revendication 1,
**caractérisé par**
des capteurs ou des commutateurs (103, 8) installés sur l'essieu avant du véhicule pour détecter la position ou la position finale de l'essieu avant du véhicule, et des moyens pour commander la propulsion du véhicule lorsque l'on détecte une position ou une position finale de l'essieu avant du véhicule correspondant à un risque de renversement.

3. Dispositif selon la revendication 1,
**caractérisé par**
au moins un capteur de vitesse de rotation (102) pour détecter une rotation du véhicule automobile autour de son essieu arrière et des moyens (105) pour commander la propulsion du véhicule dans le cas où l'on atteint ou dépasse une vitesse de rotation prédéterminée.

4. Procédé pour éviter le renversement lors d'accélérations de véhicules automobiles, en particulier de véhicules une ou à deux traces comme les motocyclettes ou les voitures particulières,
**caractérisé par**
les étapes suivantes :
- comparaison d'une différence de vitesse de rotation entre la vitesse de rotation d'au moins une roue avant (1) ou de l'essieu avant et la vitesse de rotation d'au moins une roue arrière (1) ou de l'essieu arrière du véhicule automobile avec une valeur de seuil réglable de la différence de vitesse de rotation,
- détermination d'une accélération de roue pour au moins une roue avant (1) et pour au moins une roue arrière (1), et
- commande de la propulsion du véhicule lorsque l'on atteint ou dépasse la valeur de seuil de la différence de vitesse de rotation, lorsque simultanément l'accélération de roue est négative pour au moins une roue avant (1) et l'accélération de roue est positive pour au moins une roue arrière (1).
